# EUROPÄISCHE PATENTSCHRIFT

(11) **EP 3 867 422 B1**
(45) Veröffentlichungstag und Bekanntmachung des Hinweises auf die Patenterteilung: **09.03.2022**
(21) Anmeldenummer: 18807868.7
(22) Anmeldetag: 18.10.2018
(51) Int. Cl.: C25B 1/04, C25B 1/13, C25B 1/26, C25B 1/30, C25B 9/19, C25B 15/02, C25B 15/08, C02F 1/467

(54) **ELEKTROCHEMISCHES SYSTEM ZUR SYNTHESE VON WÄSSRIGER OXIDATIONSMITTEL-LÖSUNG**
ELECTROCHEMICAL SYSTEM FOR THE SYNTHESIS OF AQUEOUS OXIDISING AGENT SOLUTIONS
SYSTÈME ÉLECTROCHIMIQUE POUR LA SYNTHÈSE D'UNE SOLUTION AQUEUSE D'AGENTS OXYDANTS

(43) Veröffentlichungstag der Anmeldung: 25.08.2021
(73) Patentinhaber: Blue Safety GmbH, 48153 Münster (DE)
(72) Erfinder: BAKHIR, Vitold, Moscow, 123103 (RU)
(74) Vertreter: Gulde & Partner
(86) Internationale Anmeldenummer: PCT/EP2018/078559
(87) Internationale Veröffentlichungsnummer: WO 2020/078553

(56) Entgegenhaltungen:
- US-A- 5 354 435
- US-B2- 7 897 023

## Beschreibung

Die Erfindung bezieht sich auf das Gebiet der chemischen Technologie und betrifft insbesondere Vorrichtungen zur Elektrolyse von wässrigen Alkalimetallchlorid-Lösungen zur Gewinnung von Chlor, Chlorverbindungen, Sauerstoff, Ozon sowie Hydroperoxidverbindungen und kann zur Desinfektion in der Medizin, Pharmazie, und Lebensmittelindustrie sowie bei der Reinigung und der Keimfreimachung von Wasser durch wässrige Lösungen von Chlorsauerstoff- und Hydroperoxidoxidantien eingesetzt werden.

Die Lösungen der Chlorsauerstoff- und Hydroperoxidverbindungen werden bei der Elektrolyse wässriger Alkalimetallchlorid-Lösungen durch Lösen von Produkten der Anodisierung von Chloridlösungen in Wasser, zumeist Natriumchloridlösungen, im Membran- bzw. Diaphragma-Verfahren gewonnen. Herkömmliche Prozesse in der Elektrolyse-Technologie von wässrigen Natriumchloridlösungen sind die Reinigung wässriger Ausgangsnatriumchloridlösungen von Härtebildnern, Schwermetallen und Beimengungen organischer Verbindungen, die durchweg in Ausgangssteinsalz vorkommen und äußerst schwierig mit traditionellen Aufbereitungsverfahren aus zur Verwendung bestimmtem Salz, z. B. in der Lebensmittelindustrie, zu entfernen sind. Für die elektrochemische Synthese werden neben der Hauptvorrichtung, dem Elektrolyseapparat, verschiedene Hilfsvorrichtungen eingesetzt, die in ihrer Gesamtheit als technisches elektrochemisches System bezeichnet werden. Die meisten technischen elektrochemischen Systeme umfassen neben dem eigentlichen elektrochemischen Reaktor, der aus einem Membran- bzw. Diaphragma-Elektrolyseapparat mit externem Abscheidebehälter, Wärmetauschern, Reglern für den Druck und die Durchflussmenge von Flüssigkeiten und Gase besteht, Zusatzeinrichtungen zur Herstellung und Reinigung der Salzlösung von Härtebildnern, multivalenten Metallionen, organischen Beimischungen sowie lonenaustausch- bzw. Umkehr-Osmoseanlagen zur Reinigung des Wassers von Härtebildnern sowie Sammelbehälter für die Produkte der elektrochemischen Synthese, insbesondere Sodakaustik- und Hypochloritlösungen.

Bekannt ist ein Verfahren zur Gewinnung von Produkten der Elektrolyse von Natriumchloridlösungen in einem technischen elektrochemischen System, das im Patent RU 2 509 829 C2 beschrieben ist.

Dieses Verfahren wird mit Hilfe eines technischen elektrochemischen Systems ausgeführt, das neben dem Membran-Elektrolyseapparat einen Salzlösebehälter umfasst, dessen Aufgabe es ist, die Prozesse der Salzlagerung und der Herstellung der eigentlichen konzentrierten Salzlösung zu integrieren, wobei diese gleichzeitig von Härtebildnern und multivalenten Metallen durch Umwandlung der löslichen Verbindungen in unlösliche Hydroxide durch dosierte Einbringung von Katholyt in die Salzlösung gereinigt wird. In diesem Behälter wird die Salzlösung von organischen Beimischungen durch dosierte Einbringung von Wasserstoffperoxid-Lösung gereinigt. Das technische elektrochemische System, das das beanspruchte Verfahren realisiert, beinhaltet ebenfalls einen Aktivkohle-Filter und einen Filter mit lonenaustauschharz zur Entfernung der Restmengen an multivalenten Kationen, die hintereinander in der Zuführungsleitung für die Salzlösung zum Elektrolyseapparat angeordnet sind. Nach dem Ionenaustauschfilter ist die dosierte Einbringung von Salzsäure in die Zuführungsleitung für die Salzlösung zum Elektrolyseapparat vorgesehen, um eine schädliche Wirkung der hyperkaustischen Salzlösung auf die Anodenbeschichtung zu vermeiden und den unproduktiven Elektroenergieaufwand für die Oxidation der Hydroxidionen sowie den Stofftransport von monovalenten Natriumkationen durch die Membran in den Kathodenraum zu verringern.

Ein Nachteil der technischen Lösung gemäß Patent RU 2 509 829 C2 besteht im notwendigen Einsatz verschiedener zusätzlicher Reagenzien zur Wiederaufbereitung des Ionenaustauschfilters, zur Oxidation der organischen Verbindungen in der Salzlösung, zur Korrektur des pH-Wertes der Salzlösung, die in den Anodenraum des Elektrolyseapparates gelangt, sowie in der notwendigen periodischen Auswechselung des Kohlefilterbetts. Diesbezüglich muss dieses elektrochemische System häufig gewartet, ständig kontrolliert und dessen Betriebsparameter korrigiert werden.

US 5,354,435 offenbart ein bestimmtes Elektrolyseverfahren, bei dem metallische Verunreinigungen entfernt werden.

Dem technischen Wesen und dem zu erzielenden Ergebnis ist die als Prototyp gewählte Vorrichtung gemäß Patent US 7 897 023 B2 am nächstliegenden. Diese Vorrichtung stellt ein elektrochemisches System dar, das einen Diaphragma-Elektrolyseapparat mit einem keramischen röhrenförmigen Ultrafiltrations-Diaphragma, mit Katholyt- und Anolyt-Umlaufkreis mit entsprechenden Abscheidebehältern zur Abscheidung von Elektrolyse-Gasen und mit Wärmetauschervorrichtungen zur Kühlung des Katholyts und Anolyts, eine aus einer Dosierpumpe mit Salzlösebehälter bestehende Vorrichtung für die Zuführung der gereinigten Salzlösung unter Druck in den Anodenraum, eine Vorrichtung zum Lösen der feuchten gasförmigen Produkte der elektrochemischen Anodenreaktionen im Wasserstrom zur Gewinnung der Oxidationsmittellösung, eine Vorrichtung zur Überdruckstabilisierung im Anodenraum, einen Sammelbehälter für die Oxidationsmittellösung sowie eine Einrichtung für die dosierte Einbringung von Katholyt aus dem Abscheidebehälter des Kathodenkreises in die zu synthetisierenden Oxidationsmittellösung umfasst.

Ein Nachteil dieser Vorrichtung besteht darin, dass multivalente Ionen, u. a. Schwermetallionen, im Fertigprodukt, d. h. in der Lösung von Chlorsauerstoff- und Hydroperoxidoxidantien in Wasser vorhanden sind. Diese Ionen kommen gewöhnlich in Trinkwasser bzw. natürlichem Süßwasser vor, das für die Herstellung der Ausgangssalzlösung sowie zur Gewinnung der Oxidationsmittellösung durch Lösen der gasförmigen Produkte der elektrochemischen Anodenreaktionen im Süßwasserstrom, die Mikrotropfen von Feuchtigkeit mit darin gelösten Singulettsauerstoff, Ozon und Wasserstoffperoxid enthalten, verwendet wird. Bekanntlich sind multivalente Metallionen, und besonders Schwermetallionen, Katalysatoren für die chemische Zersetzung von Aktivchlor- und Aktivsauerstoffverbindungen - hypochloriger Säure und Wasserstoffperoxid. Aus diesem Grund verlieren die in dieser Vorrichtung hergestellten Oxidationsmittellösungen ihre Bioaktivität innerhalb weniger Tage infolge der Selbstzersetzung unter Einwirkung katalytisch aktiver Ionen. Ein weiterer Nachteil dieser technischen Lösung ist die notwendige periodische Reinigung der Elektrodenräume des elektrochemischen Reaktors von oxidierten organischen Verbindungen unterschiedlichster Art, die in geringer Menge im Hartsalz, das zur Herstellung der Ausgangssalzlösung verwendet wird, und im Wasser nach der Vorrichtung zur Wasserenthärtung mit lonenaustauschharzen enthalten sein können. In der Zeit zwischen den Reinigungsvorgängen des elektrochemischen Reaktors ist es erforderlich, die eingestellten Betriebsparameter des elektrochemischen Systems periodisch zu ändern, indem sie an die sich mit der Zeit verschlechternden Betriebsbedingungen wegen der Bildung von Ablagerungen im elektrochemischen Reaktor angepasst werden. Diese Vorgänge erfordern Zeit und die Aufmerksamkeit des Bedienungspersonals für sämtliche peripheren Vorrichtungen, die Bestandteile des einheitlichen technischen elektrochemischen Systems zur Synthese der Oxidationsmittellösung sind: für den Wasserenthärter, für die Vorrichtung zur Herstellung von Salzlösung und für die Reguliervorrichtungen.

Aufgabe der Erfindung ist, die Zeit, über die die bioziden Eigenschaften des Endprodukts, der Oxidationsmittellösung, erhalten bleiben, durch die Reinigung des Wassers von Härtebildnern und multivalenten Metallioden sowie die Zeit für den kontinuierlichen bzw. wiederholt kurzzeitigen Betrieb des elektrochemischen Systems zwischen den Wartungsarbeitsgängen zu verlängern, ohne dass dessen Betriebsparameter durch die Reinigung der Salzlösung von organischen Beimischungen bei vollständiger Vermeidung des Verbrauchs an zusätzlichen chemischen Reagenzien korrigiert werden müssen.

Das technische Ergebnis der Erfindung wird dadurch erreicht, dass im Unterschied zu der bekannten technischen Lösung beim Eintritt des Wassers in die Vorrichtung zur Mischung des Süßwasserstroms mit den gasförmigen Oxidationsmitteln ein Filter angeordnet ist, vor dem an der Zuführungsleitung für das Süßwasser eine Einrichtung zur dosierten Einbringung des Katholyts aus dem Abscheidebehälter des Kathodenkreises in den Wasserstrom montiert ist und das Salz in der Vorrichtung für die Zuführung der Salzlösung in den Anodenraum mittels Einrichtung zur dosierten Einbringung der Oxidationsmittellösung aus dem Sammelbehälter in den Behälter der Salzlösevorrichtung gelöst wird, an dessen Ausgang ein Filter angeordnet ist, der mit dem Eingang der Dosierpumpe für die Zuführung der Salzlösung unter Druck in den Anodenraum des Elektrolyseapparates verbunden ist.

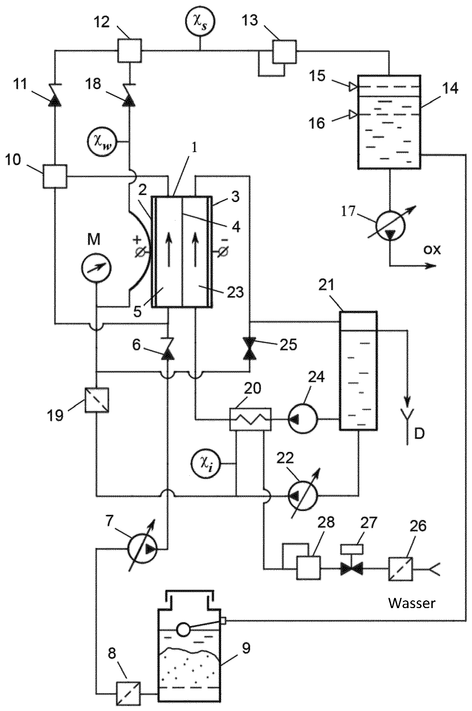

In Fig. 1 ist das hydraulische Grundschaltbild des elektrochemischen Systems zur Synthese der Oxidationsmittellösung aus Alkalimetallchloriden, vorzugsweise Natriumchlorid, dargestellt.

Das elektrochemische System beinhaltet einen Diaphragma-Elektrolyseapparat - elektrochemischen Reaktor (1) mit koaxial angeordneten Elektroden - der Anode (2), der Kathode (3) und dem Diaphragma (4). Das verfahrenstechnische Schema der Anodensynthese der Oxidationsmittel besteht aus dem Anodenraum (5) des Reaktors (1), dessen Eingang über das Rückschlagventil (6) mit dem Ausgang der Hochdruck-Dosierpumpe (7) verbunden ist, deren Eingang ihrerseits mit dem Filter (8) verbunden ist, der mit dem Behälter zum Lösen des Salzes (9) verbunden ist, in dem die Ausgangssalzlösung hergestellt und gereinigt wird. Der Ausgang des Anodenraums (5) ist mit dem Abscheidebehälter (10) zur Trennung der gasförmigen Produkte der elektrochemischen Anodenreaktionen vom Anolyt verbunden. Der Ausgang im unteren Teil des Abscheidebehälters (10) ist mit dem Eingang des Anodenraums (5) des elektrochemischen Reaktors (1) verbunden, wobei dadurch der Anodenkreis des Anolyts geschlossen wird. Der Ausgang im oberen Teil des Abscheidebehälters (10) ist über das Rückschlagventil (11) mit der Vorrichtung (12) zum Lösen der gasförmigen Produkte der elektrochemischen Anoden-Reaktionen in Süßwasser verbunden. Der Ausgang der Vorrichtung (12) ist mit dem Vordruckregler (13) verbunden, der bei Betrieb des elektrochemischen Systems eine konstante Überschreitung des Drucks im Anodenkreis des elektrochemischen Reaktors (1) über den Druck im Kathodenkreis durch Aufbau eines geregelten vorgegebenen hydraulischen Widerstands im Oxidationsmittellösungsstrom sicherstellt. In der Hydraulikleitung, die den Ausgang der Vorrichtung (12) mit dem Vordruckregler (13) verbindet, ist ein Messfühler für das Leitfähigkeitsvermögen der Oxidationsmittellösung "χₛ" angeordnet. Der Ausgang des Vordruckreglers (13) ist mit dem Eingang des Sammelbehälters für die Oxidationsmittellösung (14) verbunden, der mit Messfühlern für den zulässigen maximalen (15) und minimalen (16) Pegel der Oxidationsmittellösung ausgestattet ist.

Einer der Ausgänge des Sammelbehälters für die Oxidationsmittellösung (14) ist mit dem Eingang des Behälters (9) zur Herstellung und Reinigung der Salzlösung verbunden, der tiefer als der Sammelbehälter der Oxidationsmittellösung (14) liegt. Der andere Ausgang des Behälters (14) ist mit dem Eingang der Dosierpumpe (17) verbunden, die für die Zuführung der Oxidationsmittellösung zum Einsatzobjekt bestimmt ist, z. B. zum Punkt der Einbringung der Oxidationsmittel in das Wasserleitungssystem zur Keimfreimachung des Trinkwassers.

Das Wasser gelangt in die Vorrichtung (12) zum Lösen der gasförmigen Produkte der elektrochemischen Anodenreaktionen über das Rückschlagventil (18) und das Wärmetauschsystem des Anodenkreises des elektrochemischen Reaktors (1) vom Ausgang des Filters (19). In der hydraulischen Leitung, die den Ausgang des Wärmetauschsystems des Anodenkreises des elektrochemischen Reaktors (1) und den Eingang des Rückschlagventils (18) verbindet, ist ein Messfühler für das Leitfähigkeitsvermögen des Wassers "χ_{w}" angeordnet. An den Eingang des Filters (19) wird das durch die Wärmetauschvorrichtung (20) des Kathoden-Umlaufkreises gelaufene Wasser mit einem Zusatz von Katholyt aus dem Abscheideumlaufbehälter des Katholyts (21) zugeführt. Das Katholyt wird in den Wasserstrom am Ausgang aus der Wärmetauschvorrichtung des Kathoden-Umlaufkreises (20) mittels Dosierpumpe (22) eingebracht. In der hydraulischen Leitung, die den Ausgang des Wassers und den Eingang des Filters (19) verbindet, ist vor dem Punkt der Einbringung des Katholyts aus dem Abscheide-Umlaufbehälter des Katholyts (21) ein Messfühler für das Leitfähigkeitsvermögen des Ausgangswassers "χᵢ" angeordnet. Außer der Wärmetauschvorrichtung (20) zur Kühlung des Katholyts und außer dem Abscheide-Umlaufbehälter des Katholyts (21) umfasst der Kathodenkreis des Katholyts den Kathodenraum (23) des elektrochemischen Reaktors (1), die Umlaufpumpe (24) und das Ventil (25) zur Befüllung des Abscheide-Umlaufbehälters des Katholyts (21) bei Inbetriebnahme des Systems und Zuspeisung von gereinigtem Wasser bei Betrieb des Systems. Der Abscheide-Umlaufbehälter des Katholyts (21) ist mit einer Abflussleitung des Katholyts versehen, das sich bei Betrieb des Systems bildet. Das Wasser wird dem elektrochemischen System für die Synthese der Oxidationsmittellösung aus dem Druckwasserleitungsnetz über den Grobfilter (Vorfilter) (26), das elektromagnetische Ventil (27) und den Nachdruckregler (28) zugeführt.

Das elektrochemische System zur Synthese der Oxidationsmittellösung funktioniert folgendermaßen.

Bei der ersten Inbetriebnahme des elektrochemischen Systems (bei fehlendem Wasser und Lösungen im System) wird der Behälter (9) mit Hartsalz in der für die Synthese der vorgegebenen Menge Oxidationsmittellösung erforderlichen Menge im Verhältnis von Höchstverbrauch von 0,8 Gramm Salz pro 1 Liter Oxidationsmittellösung befüllt. Z. B. ist für die Herstellung von 25.000 Liter Oxidationsmittellösung mit einer Konzentration von aktiven Stoffen (Chlorsauerstoff- und Hydroperoxid-Verbindungen) von 500 mg/l der Behälter (9) mit 20 Kilogramm Salz zu befüllen. Der Behälter (9) wird mit gereinigtem und enthärtetem Wasser befüllt, wobei das Salz vollständig mit Wasser bedeckt sein muss. Dies erfolgt einmalig, bei der ersten Inbetriebnahme des Systems. Der Stutzen für die Wasserzuführung am Eingang des mechanischen Filters (26) wird mit der Druckleitung für das Süßwasser (Trinkwasser) verbunden. Mittels eines gesonderten Schalters wird das normal geschlossene elektromagnetische Ventil (27) mit Spannung beaufschlagt. Der vorgegebene Volumendurchstrom des Wassers durch das System sowie der vorgegebene Druck im Anodenkreis werden durch einen Nachdruckregler (28) und einen Vordruckregler (13) eingestellt, indem man sich nach den Anzeigewerten des Manometers M und des externen Durchflussmengenmessers (auf der Zeichnung nicht dargestellt) richtet.

Mittels des Ventils (25) wir der Abscheidebehälter des Katholyts (21) mit Wasser befüllt, bis der Wasserstrahl aus der Abflussleitung des Abscheidebehälters (21) tritt, anschließend wird das Ventil in eine Stellung gebracht, die sicherstellt, dass Wasser in den Abscheideumlaufbehälter für das Katholyt (21) mit einer Geschwindigkeit von 20 - 30 Tropfen pro Minute zugeführt wird (wird anhand der Geschwindigkeit des Tropfenschlags aus der Abflussleitung des Abscheidebehälters für das Katholyt (21) bestimmt). Die Dosierpumpe (7) wird eingeschaltet und der Anodenraum (5) des elektrochemischen Reaktors (1) mit Salzlösung aus dem Behälter (9) befüllt. Das Ende des Befüllungsprozesses wird anhand der Erhöhung der Messfühlerwerte für das Leitfähigkeitsvermögen der Oxidationsmittellösung "χₛ" ungefähr um das Doppelte gegenüber den Werten des Messfühlers für das Leitfähigkeitsvermögen des Wassers "χ_{w}" festgestellt. Die Steuerung der elektrischen Vorrichtungen des Systems (Pumpen, Stromquelle des elektrochemischen Reaktors) wird auf den Automatikblock (auf der Zeichnung nicht dargestellt), der mit den Messfühlern für den Pegel der Oxidationsmittellösung im Sammelbehälter (14) und den Messfühlern für das Leitfähigkeitsvermögen des konditionierten enthärteten Wasser "χ_{w}", der Oxidationsmittellösung "χₛ" und des Ausgangswassers "χᵢ" verbunden ist, umgestellt. Bei einem Pegel der Oxidationsmittellösung im Sammelbehälter (14) unter dem Messfühler (16) bzw. zwischen den Messfühlern (16) und (17) werden die Stromquelle des elektrochemischen Reaktors (auf der Zeichnung nicht dargestellt), die Katholyt-Umlaufpumpe (24), die Pumpe (22) für die dosierte Einbringung des Katholyts in den Süßwasserstrom und die Dosierpumpe (7) für die Zuführung der Salzlösung in den Anodenraum (5) des elektrochemischen Reaktors (1) eingeschaltet. Der Automatikblock, der die elektrischen Vorrichtungen des elektrochemischen Systems steuert, stellt die Regelung der Geschwindigkeit für die Zuführung des Katholyts mittels der Dosierpumpe (22) in das Ausgangssüßwasser auf der Grundlage der Signale der Messfühler für das Leitfähigkeitsvermögen des Wassers "χ_{w}" und "χᵢ" sicher, indem das Leitfähigkeitsvermögen des Wassers nach dem Filter (19) aufrechterhalten wird, das vom Messfühler für das Leitfähigkeitsvermögen "χ_{w}" auf dem vorgegebenen Wert des Messbereichs festzuhalten ist, der durch das Verhältnis χ_{w} = (1,0 ... 1,5) χᵢ bestimmt wird. Der Automatikblock stellt ebenfalls die Regelung der Geschwindigkeit der Zuführung der Salzlösung mittels der Dosierpumpe (7) in den Anodenraum (5) des elektrochemischen Reaktors (1) auf der Grundlage der Signale der Messfühler für das Leitfähigkeitsvermögen "χ_{w}" und "χₛ" sicher, indem das Leitfähigkeitsvermögen der Oxidationsmittellösung "χₛ" auf dem vorgegebenen Wert des Messbereichs aufrechterhalten wird, der durch das Verhältnis χₛ = (1,5 ... 2,5) χ_{w} bestimmt wird.

Bei Betrieb der Anlage im elektrochemischen Reaktor (1) laufen folgende Reaktionen ab.

Im elektrochemischen Reaktor (1) ist die Hauptreaktion die Freisetzung von molekularem Chlor im Anodenraum (5) und die Bildung von Natriumhydroxid im Kathodenraum (23):

NaCl + H₂O - e → NaOH + 0,5 H₂ + 0,5 Cl₂.

Zugleich läuft im Anodenraum mit geringerer Stromausbeute die Synthese des Chlordioxids direkt aus der Salzlösung sowie aus der Salzsäure ab, die sich beim Lösen des molekularen Chlors in Anodennähe (Cl₂ + H₂O ↔ HOCI + HCl) bildet:

2NaCl + 6H₂O - 10e → 2ClO₂ + 2NaOH + 5 H₂;

HCl + 2H₂O - 5e → ClO₂ + 5 H'.

Im Anodenraum des Reaktors bildet sich Ozon durch direkte Wasserzersetzung und durch Oxidation des freiwerdenden Sauerstoffs:

3H₂O - 6e → O₃ + 6H^{·}; 2H₂O - 4e → 4H^{·} + O₂; ⇒ O₂ + H₂O - 2e → O₃ + 2 H^{·}.

Mit einer geringen Stromausbeute verläuft die Bildungsreaktion von aktiven Sauerstoffverbindungen:

H₂O - 2e → 2H^{·} + O^{·}; H₂O - e → HO^{•} + H^{·}; 2H₂O - 3e → HO₂ + 3H^{·}.

Die Stromausbeute für die Bildung von Chlordioxid, Ozon, Singulett-Sauerstoff und Wasserstoffperoxid erhöht sich bei Verringerung des Mineralgehalts der wässrigen Natriumchlorid-Ausgangslösung und erreicht 20 - 30 % bei einer Salzkonzentration in der Ausgangslösung im Bereich 80 - 150 g/l bei einer Anodendichte von fünf- bis siebentausend Ampere pro Quadratmeter (5000 - 7000 A/m²). Bei Erhöhung des Salzgehalts in der Ausgangslösung auf 250 - 300 g/l verringert sich die Stromausbeute der Bildungsreaktionen von Chlordioxid, Ozon, Singulett-Sauerstoff und Wasserstoffperoxid auf 1 - 2 % bei einer Anodendichte von 5000 - 7000 A/m² und auf 0,1 - 0,2 % bei einer Anodendichte von 2000 - 3000 A/m².

Beim Lösen des gasförmigen Produkts der Anodisierung der Natriumchloridlösung in Wasser verläuft in der Regel eine Reaktion, die mit folgender Gleichung ausgedrückt wird:

Cl₂ + H₂O ↔ HOCI + HCl.

Bekanntlich ist hypochlorige Säure, deren Mengengehalt in der Lösung durch den sinkenden pH-Wert infolge der Bildung von Salzsäure beschränkt ist, ein elementares antimikrobielles Mittel. Der pH-Wert kann durch Einbringung von Alkalilauge, d. h. z. B. Natriumhydroxid, verändert werden. Allerdings führt dies zur Bildung von unerwünschten (Natriumchlorid) und wenig reaktionsfähigen (Natriumhypochlorit) Produkten. Das Natriumhypochlorit als Salz einer schwachen Säure (hypochlorige Säure) und einer starken Base (Natriumhydroxid) verfügt über eine um das 250- bis 350-Fache verringerte antimikrobielle Aktivität im Vergleich zur hypochlorigen Säure.

HOCI + HCl + 2NaOH → NaOCI + NaCl + H₂O.

Die Bildung von Natriumhypochlorit kann bei gleichzeitiger Erhöhung des pH-Wertes der Oxidationsmittellösung mit gleichzeitiger Erhöhung der Konzentration der hypochlorigen Säure und Entfernung der Härtebildner und der multivalenten Metallionen, u. a. des Eisens, durch Einbringung von freie Hydroxygruppen enthaltendem Katholyt in den Wasserstrom vermieden werden.

Bekanntlich hat der Katholyt eine außerordentlich hohe chemische Adsorptionsaktivität in Hydratbildungsreaktionen. Die erhöhte Reaktionsfähigkeit des Katholyts erklärt sich unter anderem durch die im Katholyt enthaltene große Menge an freien Hydroxygruppen und gelöstem Wasserstoff.

Bei der wechselseitigen Beeinflussung von Katholyt und im Wasser enthaltenen Elektrolyten erfolgt die Bildung von in Wasser unlöslichen Verbindungen:

3NaOH + AlCl₃ → Al(OH)₃↓ + 3NaCl; 2NaOH + ZnCl₂ → Zn(OH)₂↓ + 2NaCl;

MgCl₂ + 2NaOH → Mg(OH)₂ + 2NaCl; CaCl₂ + 2NaOH_{(konz.)} → Ca(OH)₂↓ + 2NaCl;

FeSO₄ + Ca(OH)₂ → Fe(OH)₂ + CaSO₄; FeCl₂ + 2NaOH → Fe(OH)₂↓ + 2NaCl;

Fe₂O₃ · nH₂O + NaOH → Fe₂O₃↓; FeSO₄ + NaOH → Fe(OH)₂↓ + Na₂SO₄;

2FeCl₃ + 6NaOH + (n-3)H₂O → Fe₂O₃ nH₂O↓ + 6NaCl;

Al₂(SO₄)₃ + 6NaOH_{verd}. → 2Al(OH)₃↓ + 3Na₂SO₄;

AlCl₃ + 3NaOH → Al(OH)₃↓ + 3NaCl.

Am Filter (19) werden die Hydroxide und die gebildeten Flocken - die Teilchenaggregate der Hydroxide mit den adsorbierten Molekülen organischer Verbindungen, die mikrokolloiden Teilchen und Wasserstoffbläschen abgeschieden und das von multivalenten Metallkationen gereinigte und enthärtete Wasser, das geringe Konzentrationen an gelöstem Wasserstoff und freie Hydroxygruppen enthält, strömt in die Vorrichtung zum Lösen der Oxidationsmittel (12) ein, diese bewirken eine Erhöhung der Konzentration an hypochloriger Säure in der Oxidationsmittellösung entsprechend der folgenden Reaktion: Cl₂ + H₂O + OH⁻ ↔ 2HOCl.

Die Oxidationsmittellösung wird je nach gesammelter Menge im Behälter (14) des elektrochemischen Systems außer für ihre Hauptbestimmung ebenfalls in geringen Mengen als Agens für das Lösen des Salzes im Behälter (9) verwendet, was die organischen Beimischungen oxidativ zersetzt, die ursprünglich im Steinsalz enthalten und bei herkömmlichen Verfahren der Herstellung von Salz für den Haushaltsbedarf und zahlreichen industriellen Anwendungen schwer zu entfernen sind. Die oxidierten und koagulierten organischen Fremdverbindungen werden vom Filter (8) am Ausgang des Behälters (9) zurückgehalten. Das Lösen der Salze durch die Oxidationsmittellösung ermöglicht es, die mikrobiologische Reinheit des Mittels im Salzlösebehälter zu gewährleisten. Dadurch muss er nicht mehr regelmäßig bis zum Ende des Prozesses des Lösens der gesamten befüllten Salzmenge gewartet werden. Vor der Zuführung in den Anodenraum des elektrochemischen Reaktors ist es nicht erforderlich, aus der Salzlösung die multivalenten Metallionen, u. a. auch Schwermetallionen, zu entfernen. Sämtliche Metallkationen, die in den Anodenraum als Teil der Salzlösung unter der Einwirkung des Druckgefälles und des elektrischen Feldes gelangen, werden zusammen mit dem Flüssigkeitsfilterstrom in den Kathodenraum über das poröse UV-Medium des keramischen Diaphragmas entfernt. Im Kathodenraum werden die multivalenten Metallkationen in Hydroxide umgewandelt und aus dem System über die Abflussleitung aus dem Abscheideumlaufbehälter des Katholyts (21) entfernt.

Die Versuche mit dem elektrochemischen System wurden im Vergleich mit dem Prototyp der Vorrichtung, der nach dem Patent US 7 897 023 B2 ausgeführt und mit einem Ionenaustauscher (Wasserenthärter) und mit einem Behälter zum Lösen des Salzes und zur Herstellung einer Salzlösung ergänzt wurde, durchgeführt. Für eine präzisere Vergleichsanalyse wurde das Wasser aus dem lonenaustausch-Enthärter nicht nur zur Herstellung der Salzlösung, sondern auch zum Lösen der gasförmigen Produkte des Anodenraums des elektrochemischen Reaktors verwendet. Der lonenaustausch-Enthärter wurde an die Trinkwasser-Druckleitung angeschlossen. Die Vorrichtung gemäß Patent der USA wurde ebenfalls mit einem Sammelbehälter für die Oxidationsmittellösung ergänzt. Beide vergleichbaren Systeme enthielten einen elektrochemischen Reaktor, der aus vier elektrochemischen modularen Elementen (Zellen) gemäß Patent EP 0 842 122 B1 bestand. Die wässrige Ausgangssalzlösung enthielt 250 g/l Natriumchlorid, der Gehalt an Härtebildnern in der Ausgangslösung betrug 0,3 mg-eq/l (1 da entspricht 0,3566 mg-eq/l) im elektrochemischen System gemäß Patent US 7 897 023 B2 und 4,5 mg-eq/l im Behälter (9) des Systems gemäß der neuen technischen Lösung. Der Grund für den Unterschied war der geringe Gehalt an Härtebildnern im Wasser nach dem lonenaustausch-Enthärter und der bedeutend höhere Gehalt an Härtebildnern im herkömmlichen Leitungstrinkwasser, aus dem ursprünglich die Ausgangssalzlösung im elektrochemischen System gemäß der neuen technischen Lösung hergestellt wurde. Die Stromstärke durch den elektrochemischen Reaktor in der Prototyp-Vorrichtung betrug 40 Ampere bei einer Spannung von 5 Volt. Die gleichen Werte wurden für den elektrochemischen Reaktor im elektrochemischen System gemäß der neuen technischen Lösung eingestellt. Demgemäß wurden in jedem Vergleichssystem 52 g/h Oxidationsmittel hergestellt. Die Oxidationsmittellösung, die im Prototyp-System mit einer Geschwindigkeit von 100 l/h hergestellt wurde, hatte eine Oxidationsmittelkonzentration von 500 mg/l, einen pH-Wert von 2,8 und einen Gesamtmineralgehalt von 0,86 g/l. Der Gehalt an Härtebildnern in der Oxidationsmittellösung betrug 0,2 mg-eq/l. Bei einer dosierten Einbringung des Katholyts, das sich bei der Synthese der Oxidationsmittellösung bildet, erhöhte sich der pH-Wert der Lösung am Ausgang auf 6,0 bei gleichzeitiger Erhöhung des Mineralgehalts der Lösung auf 1,5 g/l. Die Oxidationsmittellösung, die mit einer Geschwindigkeit von 100 l/h in der Vorrichtung gemäß der neuen technischen Lösung hergestellt wird, hatte einen pH-Wert von 3,0 bei einer Oxidationsmittelkonzentration von 500 mg/l und einem Gesamtmineralgehalt von 0,66 g/l. Bei der dosierten Einbringung von Katholyt in das Ausgangswasser erhöhte sich der pH-Wert der Oxidationsmittellösung bei gleichzeitiger Erhöhung des Mineralgehalts auf 0,82 g/l. Die Härte der Oxidationsmittellösung lag im Bereich 0,8 mg-eq/l, verringerte sich allerdings im Verlauf von 2 Stunden Betrieb auf 0,6 mg-eq/l. Die Auswertung der Ergebnisse dieser Untersuchungen zeigt, dass die Einbringung von Katholyt vor dem Filter (19) die Härte des Wassers zum Lösen der gasförmigen Produkte der Anodisierung der Natriumchloridlösung wesentlich verringert und dass die Einbringung der Oxidationsmittellösung mit einem reduzierten Gehalt an Härtebildnern im Behälter (9) zur Herstellung der Salzlösung den Gehalt an Härtebildnern in der Oxidationsmittellösung wesentlich verringert.

Beide Systeme liefen kontinuierlich je 10 Stunden täglich über 10 Tage. Proben der Oxidationsmittellösungen wurden zwei Mal entnommen: am Ende des zweiten Tages des Betriebs vergleichbarer elektrochemischer Systeme (20 Betriebsstunden) und nach 10 Tagen (100 Betriebsstunden). Die Lösung aus dem Prototyp-System wies nach zwanzig Betriebsstunden des Systems folgende Werte auf: pH-Wert 6,4; Oxidationsmittelkonzentration 480 mg/l; Mineralgehalt 1,4 g/l. Nach zehn Tagen verringerte sich die Oxidationsmittelkonzentration in der entnommenen Probe (Menge der Lösung 1 Liter) auf 460 mg/l. Der Gehalt an Härtebildnern in der Oxidationsmittellösung des Prototyps betrug 0,9 mg-eq/l, d. h. es war eine Verschlechterung in der Funktionsweise des Ionenaustauschfilters festzustellen. Die Lösung aus dem System gemäß der neuen technischen Lösung wies nach 20 Betriebsstunden des Systems folgende Werte auf: pH-Wert 5,9; Oxidationsmittelkonzentration 510 mg/l; Gesamtmineralgehalt 0,83 g/l. Nach 10 Tagen war die Oxidationsmittelkonzentration in der entnommenen Probe (Lösungsprobe) unverändert. Der Gehalt an Härtebildnern in der Oxidationsmittellösung des Prototyps betrug 0,6 mg-eq/l, d. h. die Einbringung von Katholyt in das Ausgangswasser vor dem Filter ermöglichte eine Reinigung des Wassers von Härtebildnern. Damit blieben die Oxidationsmittel in der Lösung länger erhalten.

Die Lösung aus dem Prototyp-System wies nach einhundert Betriebsstunden des Systems folgende Werte auf: pH-Wert 6,3; Oxidationsmittelkonzentration 470 mg/l; Gesamtmineralgehalt 1,4 g/l. Nach 10 Tagen verringerte sich die Oxidationsmittelkonzentration in der entnommenen Probe (Menge der Lösung 1 Liter) auf 440 mg/l. Der Gehalt an Härtebildnern in der Oxidationsmittellösung des Prototyps betrug 3,8 mg-eq/l, was offensichtlich mit der signifikanten Verschlechterung der Funktion des Ionenaustauschfilters im Zusammenhang steht. Die Lösung aus dem System gemäß der neuen technischen Lösung wies nach einhundert Betriebsstunden folgende Werte auf: Werte: pH-Wert 5,9; Oxidationsmittelkonzentration 500 mg/l; Gesamtmineralgehalt 0,83 g/l. Nach 10 Tagen Betrieb war die Oxidationsmittelkonzentration in der entnommenen Probe (Lösungsprobe) unverändert. Der Gehalt an Härtebildnern in der Oxidationsmittellösung aus dem System gemäß der neuen technischen Lösung betrug 0,6 mg-eq/l, d. h. die Einbringung von Katholyt in das Ausgangswasser vor dem Filter ermöglichte es, das Wassers effektiv und über längere Zeit von Härtebildnern zu reinigen. Dadurch blieben die Oxidationsmittel in der Lösung länger erhalten. Eine Prüfung der Behälter für die Lösung des Salzes und die Herstellung der Salzlösung zeigte einen Biofilm an Mikroorganismen im Behälter des Prototyp-Systems. Im Behälter (9) des Systems gemäß der neuen technischen Lösung fehlte der Biofilm vollständig. Diese Tatsache ist äußerst wichtig, da die organischen Stoffe, die sich bei der Tätigkeit des Biofilms bilden, bei deren Oxidation im Anodenraum des elektrochemischen Reaktors in der Lage sind, die elektrolytische Zersetzung des Natriumchlorids durch die Bildung schwer zu entfernender Verunreinigungen an den Elektroden und am Diaphragma (Membran) negativ zu beeinflussen.

### Bezugszeichen

- 1: Reaktor
- 2: Anode
- 3: Kathode
- 4: Diaphragma
- 5: Anodenraum
- 6: Rückschlagventil
- 7: Hochdruck-Dosierpumpe
- 8: Filter
- 9: Salz
- 10: Abscheidebehälter
- 11: Rückschlagventil
- 12: Vorrichtung
- 13: Vordruckregler
- 14: Oxidationsmittellösung
- 15: maximaler Pegel
- 16: minimaler Pegel
- 17: Dosierpumpe
- 18: Rückschlagventil
- 19: Eingang Filter
- 20: Wärmetauschvorrichtung
- 21: Katholyt
- 22: Dosierpumpe
- 23: Kathodenraum
- 24: Umlaufpumpe
- 25: Ventil
- 26: Grobfilter (Vorfilter)
- 27: elektromagnetisches Ventil
- 28: Nachdruckregler

## Patentansprüche

1. Elektrochemisches System zur Synthese einer Oxidationsmittellösung aus Wasser und einer Natriumchloridlösung, umfassend:
einen Diaphragma-Elektrolyseapparat (1) mit einem röhrenförmigen keramischen Ultrafiltrationsdiaphragma (4),
einen Umlaufkreis des Katholyts und Anolyts, mit entsprechenden Abscheidebehältern (10, 21) zur Trennung der Elektrolysegase sowie mit Wärmetauschervorrichtungen (20) zur Kühlung des Katholyts und Anolyts,
eine Vorrichtung für die Zuführung von wässriger Salzlösung in einen Anodenraum (5) des Diaphragma-Elektrolyseapparats (4) unter Druck, die aus einer Dosierpumpe (7) und einem Behälter (9) zum Lösen des Salzes besteht,
eine Vorrichtung (12) zum Lösen feuchter gasförmiger Produkte der elektrochemischen Anodenreaktionen in einem Süßwasserstrom zur Gewinnung einer Oxidationsmittellösung,
eine Vorrichtung (13) zur Stabilisierung des Überdrucks im Anodenraum (5),
einen Sammelbehälter (14) für die Oxidationsmittellösung sowie
eine Einrichtung (22) für die dosierte Zuführung des Katholyts aus dem Abscheidebehälter (21) des Kathodenkreises in die zu synthetisierende Oxidationsmittellösung,
**dadurch gekennzeichnet, dass**
in einer Zuführungsleitung für das Süßwasser zur Vorrichtung (12) zum Lösen feuchter gasförmiger Produkte der elektrochemischen Anodenreaktionen ein Filter (19) angeordnet ist,
vor dem Filter (19) in der Zuführungsleitung für das Süßwasser die eine Einrichtung (22) zur dosierten Einbringung von Katholyt aus dem Abscheidebehälter (21) des Kathodenkreises in den Wasserstrom, der an den Filter (19) strömt, montiert ist, und
wobei das Lösen des Salzes im Behälter (9) der Vorrichtung für die Zuführung von wässriger Salzlösung in den Anodenraum (5) in der Oxidationsmittellösung mittels einer Einrichtung zur dosierten Zuführung der Oxidationsmittellösung aus dem Sammelbehälter (14) für die Oxidationsmittellösung in den Behälter (9) zum Lösen des Salzes erfolgt, an dessen Ausgang ein Filter (8) angeordnet ist, der mit dem Eingang der Dosierpumpe (7) für die Zuführung der Salzlösung unter Druck in den Anodenraum (5) des Elektrolyseapparates verbunden ist.

## Claims

1. An electrochemical system for synthesizing an oxidizing agent solution from water and a sodium chloride solution, comprising:
a diaphragm electrolysis apparatus (1) with a tubular ceramic ultrafiltration diaphragm (4),
a circulation circuit for the catholyte and anolyte, with corresponding separation vessels (10, 21) for separating the electrolysis gases and with heat exchanger devices (20) for cooling the catholyte and anolyte,
a device for feeding aqueous salt solution into an anode compartment (5) of the diaphragm electrolysis apparatus (1) under pressure, said device consisting of a metering pump (7) with a vessel (9) for dissolving the salt,
a device (12) for dissolving moist gaseous products of the electrochemical anode reactions in a fresh water stream to obtain an oxidizing agent solution,
a device (13) for stabilizing the overpressure in the anode compartment (5),
a collection vessel (14) for the oxidizing agent solution, and
a means (22) for metered feed of the catholyte from the separation vessel (21) of the cathode circuit into the oxidizing agent solution to be synthesized,
**characterized in that**
a filter (19) is arranged in a feed line feeding the fresh water to the device (12) for dissolving moist gaseous products of the electrochemical anode reactions,
the means (22) for metered feed of catholyte from the separation vessel (21) of the cathode circuit into the water stream which is flowing to the filter (19) is installed in a fresh water feed line upstream of the filter (19), and
wherein the dissolution of the salt in the vessel (9) of the device for feeding aqueous salt solution into the anode compartment (5) in the oxidizing agent solution proceeds using a means for metered feeding of the oxidizing agent solution from the collection vessel (14) for the oxidizing agent solution into the vessel (9) for dissolving the salt, at the outlet of which a filter (8) is arranged which is connected to the inlet of the metering pump (7) for feeding the salt solution under pressure into the anode compartment (5) of the electrolysis apparatus.

## Revendications

1. Système électrochimique pour la synthèse d'une solution d'oxydant consistant en l'eau et une solution de chlorure de sodium, comprenant :
un appareil d'électrolyse à diaphragme (1) ayant un diaphragme d'ultrafiltration céramique tubulaire (4),
un circuit de circulation du catholyte et de l'anolyte, ayant des récipients de séparation correspondants (10, 21) pour la séparation des gaz d'électrolyse ainsi qu'ayant des dispositifs d'échange de chaleur (20) pour le refroidissement du catholyte et de l'anolyte,
un dispositif pour l'amenée de solution saline aqueuse sous pression dans un compartiment anodique (5) de l'appareil d'électrolyse à diaphragme (4), qui est constitué d'une pompe de dosage (7) et d'un récipient (9) pour la dissolution du sel,
un dispositif (12) pour la dissolution de produits gazeux humides des réactions anodiques électrochimiques dans un courant d'eau douce pour obtenir une solution d'oxydant,
un dispositif (13) pour la stabilisation de la surpression dans le compartiment anodique (5),
un récipient collecteur (14) pour la solution d'oxydant ainsi que un dispositif (22) pour l'amenée dosée du catholyte à partir du récipient de séparation (21) du circuit cathodique dans la solution d'oxydant à synthétiser,
**caractérisé en ce que**
un filtre (19) est agencé dans une conduite d'amenée pour l'eau douce dans le dispositif (12) pour la dissolution de produits gazeux humides des réactions anodiques électrochimiques,
le dispositif (22) pour l'introduction dosée de catholyte à partir du récipient de séparation (21) du circuit cathodique dans le courant d'eau qui s'écoule vers le filtre (19) est monté avant le filtre (19) dans la conduite d'amenée pour l'eau douce, et
la dissolution du sel dans le récipient (9) du dispositif pour l'amenée de solution saline aqueuse dans le compartiment anodique (5) est effectuée dans la solution d'oxydant au moyen d'un dispositif pour l'amenée dosée de la solution d'oxydant à partir du récipient collecteur (14) pour la solution d'oxydant dans le récipient (9) pour la dissolution du sel, à la sortie duquel est agencé un filtre (8), qui est relié à l'entrée de la pompe de dosage (7) pour l'amenée de la solution saline sous pression dans le compartiment anodique (5) de l'appareil d'électrolyse.
